# EUROPEAN PATENT APPLICATION

(11) **EP 4 650 731 A1**
(43) Date of publication of application: **19.11.2025**
(21) Application number: 24212423.8
(22) Date of filing: 12.11.2024
(51) Int. Cl.: G01H 3/00, H01R 13/641

(54) **FITTING SOUND DETECTION DEVICE**

(30) Priority: 17.05.2024 JP 2024081079
(71) Applicant: KDDI Corporation, Tokyo 163-8003 (JP); KDDI Europe Limited, London E1W 1YW (GB)
(72) Inventor: SHERBAZ, Hassan, London, E1W 1YW (GB); TSUJI, Kyohei, Tokyo, 163-8003 (JP); MIYAZAWA, Mitsuyoshi, Tokyo, 163-8003 (JP)
(74) Representative: Mathys & Squire

(57) **Abstract**

A fitting sound detection device includes: a microphone (21); a holding member (1) arranged to hold a fitting member provided on an end of a wire harness; a sensor (25) arranged to detect the wire harness in which the fitting member is held by the holding member (1); and control means (26) configured to control execution of a determination process to determine whether or not sound collected by the microphone (21) includes a fitting sound by the fitting member on a basis of sound data based on the sound collected by the microphone (21), wherein the control means (26) is further configured to execute the determination process while the sensor (25) detects the wire harness, and not execute the determination process while the sensor (25) does not detect the wire harness.

## Description

### BACKGROUND OF THE INVENTION

### Field of the Invention

The present disclosure relates to a fitting sound detection device that detects a fitting sound, which is generated when fitting members are fitted together.

### Description of the Related Art

In the manufacture of products containing components that operate on electricity, such as automobiles, communications equipment, and medical equipment, wire harnesses are used to connect components together. A wire harness is a product including one or more cables for transmitting electric power, electrical signals and the like, and a fitting member, such as a connector for collectively connecting the one or more cables to other components, attached to the one or more cables.

In the manufacturing process of products using the wire harness, a worker needs to perform fitting operation, in which the fitting member on the end of the wire harness into another fitting member. If components are not properly electrically connected to each other due to improper fitting operation, it may cause manufacturing defects in the final product.

For this reason, Japanese Patent Laid-Open No. 2023-112729 and Japanese Patent Laid-Open No. 2022-108326 disclose a method of judging whether or not the fitting operation is successful by detecting a "fitting sound" that is generated when fitting members are fitted. In Japanese Patent Laid-Open No. 2023-112729 and Japanese Patent Laid-Open No. 2022-108326, sound data is collected by a wristwatch device worn by a worker during the fitting operation to detect the fitting sound. The fitting sound is a "predetermined sound" that occurs when the fitting members are properly fitted, and is also called as a "click sound". For example, fitting members are equipped with a lock mechanism, and when the fitting members are properly fitted together, the lock mechanism keeps the fitting members in a fitted state. The fitting sound is generated when the locking mechanism correctly locks the two fitting members together.

### SUMMARY OF THE INVENTION

In order to minimize manufacturing defects in products that require fitting operation during the manufacturing process, there is a need to increase the workability of the fitting operation and to detect the fitting sound with high accuracy.

The present disclosure provides a technique to increase the workability of the fitting operation and to detect the fitting sound with high accuracy.

The present invention in its first aspect provides a fitting sound detection device as specified in claims 1 to 14.

Further features of the present invention will become apparent from the following description of exemplary embodiments with reference to the attached drawings.

### BRIEF DESCRIPTION OF THE DRAWINGS

FIG. 1 is a schematic diagram of a fitting sound detection system including a fitting sound detection device.
FIG. 2 is a schematic perspective view of an example of the fitting sound detection device.
FIG. 3 is a diagram showing an example of a state in which a wire harness is held by the fitting sound detection device.
FIG. 4 is a diagram showing an example of a schematic external appearance of a head of the fitting sound detection device.
FIG. 5 is an example of a functional configuration of the fitting sound detection device.

### DESCRIPTION OF THE EMBODIMENTS

The embodiments are described in detail below with reference to the accompanying drawings. The following embodiments do not limit the invention of the claims, and not all of the combinations of features described in the embodiments are essential to the invention. Two or more of the features described in the embodiments may be arbitrarily combined. The same reference number is used to the same or similar element, and duplicated explanations are omitted.

### First Embodiment

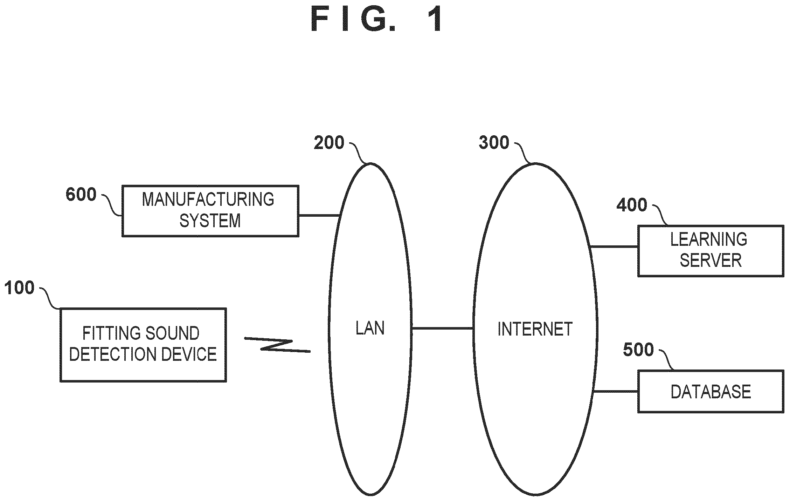

FIG. 1 shows an example of a fitting sound detection system that includes a fitting sound detection device 100. The fitting sound detection device 100 is used in a factory during the fitting operation. The fitting sound detection device 100 may be configured to be wirelessly accessible to a local area network (LAN) 200 installed in the factory. A manufacturing system 600 that manages the manufacturing process in the factory is connected to the LAN 200. The LAN 200 is connected to the Internet 300, and a learning server 400 and a database 500 are connected to the Internet 300.

The fitting sound detection device 100 according to the present embodiment uses a learning model for detecting the fitting sound in the fitting operation. The learning server 400 collects sound data from a plurality of fitting sound detection devices 100 during the fitting operation, and performs machine learning based on the collected sound data to generate a learning model.

Since the fitting sound may be different depending on the type of the fitting member, a learning model may be generated for each type of the fitting member. In other words, one learning model may be associated with one type of the fitting member. The type of the fitting member can be distinguished by the shape, material and the like of the fitting member. If the same learning model can be applied to different types of fitting members, the same learning model can be used. In other words, one learning model can be used to detect fitting sounds of multiple types of fitting members. For example, if multiple types of fitting members that can use the same learning model are treated as one member group, one learning model can be generated in association with one member group.

Further, since the background noise in a factory can vary from factory to factory, a learning model can be generated for each factory (location) where the fitting sound detection device 100 is used. In other words, one learning model may be associated with one location where the learning model is used. If the same learning model can be applied even if locations where the learning model is used are different, the same learning model can be used. In other words, one learning model can be commonly used in multiple locations. For example, if multiple locations where the same learning model can be used are treated as one location group, one learning model can be generated in association with one location group. Furthermore, a learning model can be generated for each combination of the type of fitting member and the factory (location) that uses the fitting sound detection device 100. Furthermore, a learning model can be generated for each combination of the member group and the location group.

The database 500 stores one or more learning models generated by the learning server 400. Before starting the fitting operation, the fitting sound detection device 100 downloads and stores a learning model to be used in the fitting operation from the database 500. The learning server 400 and the database 500 may be the same server. Furthermore, the database 500 may be connected to the LAN 200, and the database 500 can be configured to store only the learning models to be used in the factory where the LAN 200 is installed.

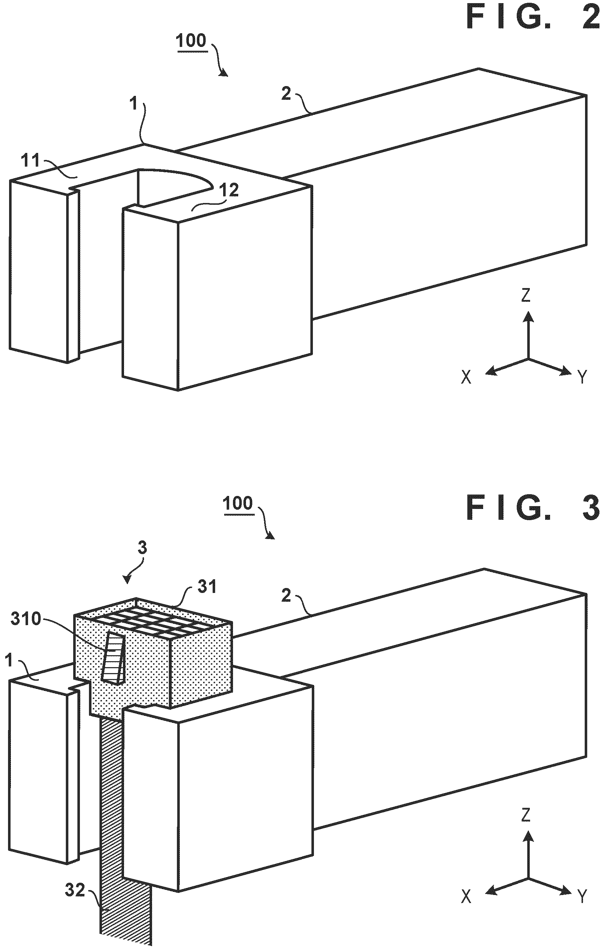

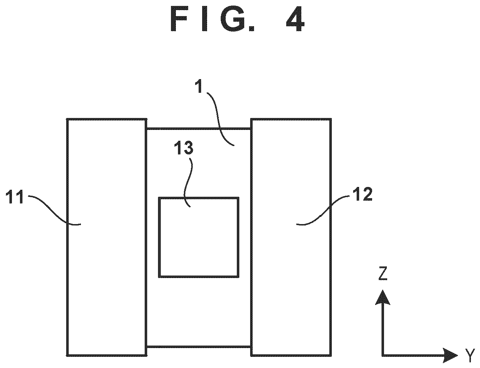

FIG. 2 shows an exemplary schematic perspective view of the fitting sound detection device 100, FIG. 3 shows the state in which the fitting sound detection device 100 holds a fitting member 31 of a wire harness 3, and FIG. 4 shows the fitting sound detection device 100 as viewed in the -X direction of FIG. 2. FIGS. 2 to 4 are schematic diagrams for understanding an example of the fitting sound detection device 100, and do not limit the configuration of the fitting sound detection device 100. In FIG. 3, a reference sign 310 indicates a locking mechanism provided in the fitting member 31, and a reference sign 32 indicates a cable (or cables) of the wire harness 3.

The fitting sound detection device 100 includes ahead 1 and a main body 2. The head 1 is provided with a plurality of types depending on the shape and size of the fitting member 31 of the wire harness 3 to be worked on, and is configured to be detachable from and attached to the main body 2. A worker performs the fitting operation by attaching the head 1 corresponding to the fitting member 31 of the wire harness 3 to be worked on to the main body 2. Various component are stored inside a housing of the main body 2.

The head 1 is a holding member that holds the fitting member 31 of the wire harness 3 and is provided with a handle member 11 and a handle member 12. With the fitting member 31 of the wire harness 3 between the handle member 11 and the handle member 12, the worker holds the fitting member 31 of the wire harness 3 by grasping (gripping) the handle member 11 and the handle member 12 so that the handle members 11 and 12 approach each other.

As shown in FIG. 3, the head 1 may be configured so that instead of holding the whole of the fitting member 31 with the head 1, only a certain area on the cable 32 side of the fitting member 31 is gripped with the head 1, and the remaining area on the side of the fitting member 31, which is to be fitted with another fitting member, protrudes from the head 1.

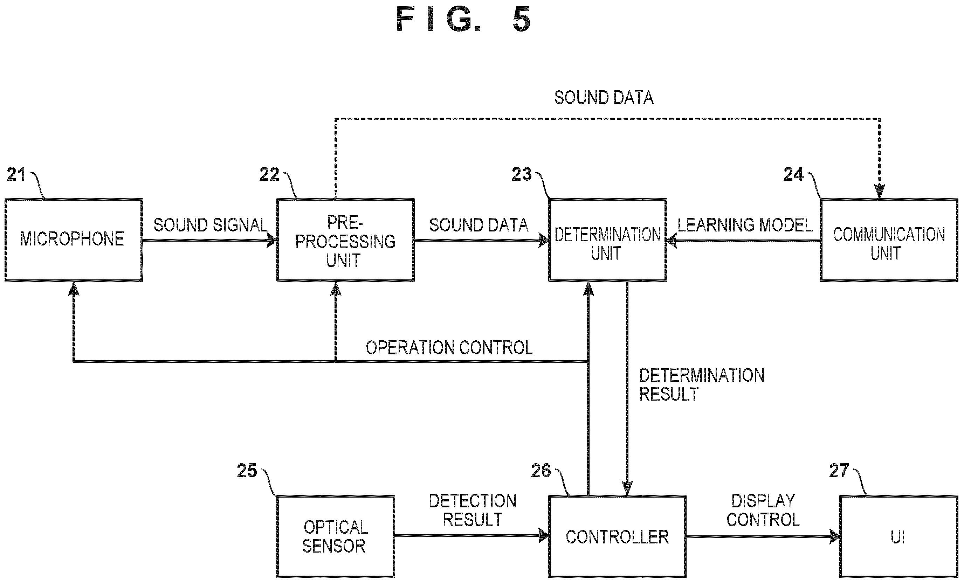

As shown in FIG. 4, a hole 13 is provided on the side of the head 1 facing the main body 2 to transmit light emitted by an optical sensor 25 (FIG. 5) provided on the main body 2 and its reflected light. The optical sensor 25 is configured to optically detect the cable 32 of the wire harness 3 when the worker holds the fitting member 31 of the wire harness 3 with the head 1.

The handle members 11 and 12 are configured to be movable or deformable in a direction closer to each other so that the worker can hold the fitting member 31. As an example, the handle members 11 and 12 can be configured to be elastically deformable. The handle member 11 and the handle member 12 may be configured so that only one of them is movable or deformable so as to approach the other. Since the head 1 is configured so that a worker holds the fitting member 31 by gripping the fitting member 31 via the handle members 11 and 12, the shape of the surface of the head 1 that contacts the fitting member 31 does not need to be the same as the shape of the surface of the fitting member 31 that contacts the head 1. Therefore, the same head 1 can be used in common for a plurality of types of fitting members 31.

In the configuration example shown in FIG. 3, if the direction in which the head 1 and the main body 2 are aligned when the head 1 is attached to the main body 2 is defined as the X direction, then the handle members 11 and 12 are provided along the Y direction when the head 1 is attached to the main body 2; however, the head 1 can also be configured so that the handle members 11 and 12 are provided along the X direction. In other words, the head 1 can be attached to the main body 2 in a state rotated by 90 degrees from the state shown in FIG. 2 around the Z axis as the rotation axis.

Furthermore, in the configuration example shown in FIG. 3, the direction in which the head 1 and the main body 2 are aligned when the head 1 is attached to the main body 2 is defined as the X direction, the longitudinal direction of the wire harness 3 held by the head 1 is generally in the Z direction. This is because the head 1 shown in the configuration example of FIG. 3 is configured to hold the fitting member 31 of the wire harness 3 at one end in the Z direction. However, for example, when the direction in which the head 1 and the main body 2 are aligned is defined as the X direction, the head 1 may be configured to hold the fitting member 31 of the wire harness 3 at the end opposite to the main body 2, out of the two ends in the X direction. In other words, the head 1 may be configured to be attached to the main body 2 in a state rotated 90 degrees from the state shown in FIG. 2 around the Y axis as the rotation axis. In this case, the cable 32 of the wire harness 3 held by the head 1 extends toward the main body 2 (X direction), but does not interfere with the main body 2 by drawing the cable 32 out from between the handle member 11 and the handle member 12.

FIG. 5 shows an example of the functional configuration of the fitting sound detection device 100. The hardware to realize the functional blocks in FIG. 5 is housed in the housing of the main body 2. The controller 26, for example, includes one or more processors and is configured to control the entire fitting sound detection device 100.

The optical sensor 25 detects whether or not the fitting sound detection device 100 is holding the wire harness 3 as described above. For example, the optical sensor 25 emits light through the hole 13 provided in the head 1 and receives the reflected light. When the head 1 does not hold the wire harness 3, the light emitted by the optical sensor 25 passes between the handle member 11 and the handle member 12, so the optical sensor 25 does not receive the reflected light. On the other hand, when the head 1 holds the wire harness 3, the light sensor 25 receives the reflected light from the cable 32 of the wire harness 3. Therefore, whether or not the head 1 is holding the wire harness 3 can be detected by whether or not the optical sensor 25 is receiving the reflected light.

Furthermore, a Time of Flight (TOF) sensor can be used as the optical sensor 25. The TOF sensor is an optical sensor that measures the distance to an object. The approximate distance between the TOF sensor and the cable 32 when the head 1 holds the wire harness 3 can be determined in advance. Therefore, by using the TOF sensor, it is possible to accurately detect whether or not the head 1 is holding the wire harness 3 even if the reflected light is received when the head 1 is not holding the wire harness 3.

In this example, the optical sensor 25 detects the cable 32 of the wire harness 3 when the worker is holding the fitting member 31 of the wire harness 3 with the head 1, but it can also detect the fitting member 31 of the wire harness 3. In other words, the optical sensor 25 can be configured to detect whether or not the worker is holding the fitting member 31 of the wire harness 3 with the head 1 by detecting the wire harness 3, whose fitting member 31 is held by the head 1.

A microphone 21 is, for example, a micro-electro-mechanical system (MEMS) microphone that converts sounds into an analog sound signal and outputs it to a pre-processing unit 22. The microphone 21 may be positioned on the head 1 side in the main body 2 in order to accurately detect the fitting sound. Furthermore, although not shown in FIG. 4, a hole may be provided on the side surface of the head 1 facing the main body 2 to facilitate the microphone 21 collecting sounds.

The pre-processing unit 22 has an analog-to-digital converter (ADC) that converts the analog sound signal output by the microphone 21 into digital sound data, and outputs the digital sound data to a determination unit 23.

The determination unit 23 stores a learning model obtained from the database 500, and by using the sound data from the pre-processing unit 22 as input to the learning model, it determines whether or not sounds indicated by the sound data includes the fitting sound generated by the fitting member 31. The determination unit 23 notifies the controller 26 of a determination result as to whether or not the sounds indicated by the sound data includes the fitting sound generated by the fitting member 31, i.e., a detection result as to whether or not the fitting sound is detected. The function of the determination unit 23 may be realized by the processor of the controller 26.

The controller 26 presents the detection result of whether or not the fitting sound was detected to the worker via a user interface (UI) 27 based on the determination result from the determination unit 23. As an example, the UI 27 has, for example, a light emitting diode (LED) that lights up in at least two colors. The controller 26 controls the LED to light up in a first color when the fitting sound is detected, and controls the LED to light up in a second color that is different from the first color when no fitting sound is detected. Alternatively, the UI 27 has, for example, an LED that lights in a single color. The controller 26 turns off the LED until it detects the fitting sound, and when it detects the fitting sound, it turns on the LED until the predetermined condition is met. The predetermined condition may be met, for example, by the worker making a confirmation input via the UI 27. Alternatively, the predetermined condition may be met when the optical sensor 25 no longer detects the wire harness 3. Further, the predetermined condition may be met when a predetermined period of time elapses after the optical sensor 25 no longer detects the wire harness 3. Furthermore, the UI 27 may have a plurality of LEDs. The controller 26 changes the manner in which the plurality of LEDs are turned on and off depending on whether or not the fitting sound is detected. The UI 27 may have a display, and the display can be configured to indicate whether or not the fitting sound has been detected. In addition, the UI 27 may have one or more operation buttons for turning the power of the fitting sound detection device 100 on and off and for switching the operation mode of the fitting sound detection device 100, which will be described later.

The communication unit 24 has the function of wirelessly accessing the LAN 200 and communicating with devices on the LAN 200 and the Internet 300, such as the manufacturing system 600, learning server 400, and database 500.

The fitting sound detection device 100 may be configured to operate in either a "working mode" or a "learning mode". The worker can set the operation mode of the fitting sound detection device 100 via the UI 27. The "working mode" is a mode used when performing the fitting operation, and the "learning mode" is a mode used when sending sound data to the learning server 400 for machine learning.

The following describes the operation of the fitting sound detection device 100 during the fitting operation. The fitting sound detection device 100 is set to the "working mode" for the fitting operation. A learning model is stored in the determination unit 23 according to the target wire harness 3 to be fitted for the fitting operation in advance. Since the communication unit 24 is not necessary for the fitting operation, the controller 26 may set an operation state of the communication unit 24 to "power-saving state" instead of "normal state". The normal state is a state in which the communication unit 24 can operate normally, i.e., the communication unit 24 can communicate. The power-saving state is a state in which power consumption is lower than the normal state. For example, a state in which the power supply to the communication unit 24 is turned off is a form of the power-saving state. A state in which the power supply to some circuits of the communication unit 24 is continued and the power supply to the remaining circuits of the communication unit 24 is cut off for a quick transition to the normal state is also a form of the power-saving state.

As with the communication unit 24, a normal state and a power-saving state are defined for the microphone 21 and pre-processing unit 22 as operation states. In the normal state, the microphone 21 collects sounds and outputs a sound signal. On the other hand, in the power-saving state, the microphone 21 does not collect sounds and therefore does not output the sound signal. In the normal state, the pre-processing unit 22 outputs sound data when a sound signal is input. On the other hand, in the power-saving state, preprocessor 22 does not output sound data even if a sound signal is input.

Furthermore, the determination unit 23 may be configured to define a normal state and a power-saving state in the same manner as the communication unit 24. In the normal state, when the sound data is input, the determination unit 23 uses the learning model to determine whether or not the fitting sound is detected. On the other hand, in the power-saving state, the determination unit 23 does not use the learning model to make a judgment.

In this embodiment, the controller 26 controls the fitting sound detection device 100 so that a determination process to determine the fitting sound is executed only while the optical sensor 25 is detecting the wire harness 3, and the determination process is not executed during other periods of time. For this purpose, the controller 26 sets both the microphone 21 and the pre-processing unit 22 to the power-saving state while the optical sensor 25 is not detecting the wire harness 3. In other words, the controller 26 controls the fitting sound detection device 100 not collecting sounds while the optical sensor 25 is not detecting the wire harness 3. Therefore, no sound data is input to the determination unit 23, and therefore, no determination process is performed. Instead of setting both the microphone 21 and the pre-processing unit 22 to the power-saving state while the optical sensor 25 is not detecting the wire harness 3, only one of the microphone 21 and the pre-processing unit 22 can be set to the power-saving state and the other to the normal state, thereby no sound collection is performed.

When the operation state of the determination unit 23 is configurable, the determination unit 23 can also be set to the power-saving state while the optical sensor 25 is not detecting the wire harness 3.

When the optical sensor 25 detects the wire harness 3, the controller 26 transitions the functional blocks that were set to the power-saving state while the optical sensor 25 did not detect the wire harness 3 to the normal state. In other words, controller 26 sets all of the microphone 21, pre-processing unit 22, and determination unit 23 to the normal state while optical sensor 25 detects the wire harness 3.

Therefore, in one determination period from the time when the fitting sound detection device 100 holds the wire harness 3 until it no longer holds the wire harness 3, the microphone 21 and the pre-processing unit 22 collect sounds and output sound data. Then, the determination unit 23 determines whether or not the sounds indicated by the sound data input from the pre-processing unit 22 include the fitting sound, and notifies the controller 26 of the determination result. In other words, the determination unit 23 notifies the controller 26 of the detection result of whether or not the fitting sound is detected during one determination period.

The controller 26 presents the determination result by the determination unit 23 to the worker via the UI 27. The determination result indicating that the fitting sound was detected indicates that the fitting operation was good, and the determination result indicating that the fitting sound was not detected indicates that the fitting operation was not good.

If the fitting sound is not detected in the determination process, the controller 26 may be configured to notify the manufacturing system 600 of the error via the communication unit 24. The manufacturing system 600 may initiate necessary processing, such as stopping the production line, in response to being notified of the error. In this case, the controller 26 sets the communication unit 24 to the normal state at least while the determination process is being performed.

The operation of the fitting sound detection device 100 when set to the learning mode will now be described. The only difference from the working mode is that the communication unit 24 transmits sound data to the learning server 400 via the LAN 200 and the Internet 300. Therefore, in the learning mode, the controller 26 sets the communication unit 24 to the normal state while the fitting sound detection device 100 holds the wire harness 3. When the fitting operation is performed, the worker individually confirms whether the fitting operation is good or bad apart from the determination result by the learning model, and the result confirmed by the worker is transmitted to the learning server 400 via the UI 27. For example, the worker can check whether the fitting operation is performed properly by checking whether the fitting members are locked together by the locking mechanism. The result confirmed by the worker becomes the correct answer label for the sound data transmitted immediately before. In the learning mode, the controller 26 can set the determination unit 23 to the power-saving state, because the determination result by the determination unit 23 is not needed in the learning mode.

According to the present embodiment, the fitting sound detection device 100 has the head 1 for the worker to hold the fitting member 31 of the wire harness 3. When the worker directly holds the fitting member 31 with his/her hand, the size, shape, position of the fitting member 31 in the product and the like may prevent the worker from holding the fitting member 31 stably, thus making it difficult to perform the fitting operation correctly. On the other hand, in the fitting sound detection device 100 according to this embodiment, the worker holds the fitting member 31 via the head 1, thereby enabling the worker to hold the fitting member 31 stably, thereby improving the workability of the fitting operation compared to when the worker holds the fitting member 31 directly with his/her hand to perform the fitting process.

Furthermore, in this embodiment, the microphone 21 in the main body 2 of the fitting sound detection device 100 collects sounds during the fitting process. By using the fitting sound detection device 100 according to the present embodiment, the sounds can be collected at a position closer to the fitting member 31 than with conventional wristwatch-type devices, and thus, the accuracy of determining the fitting sound by the learning model can be higher.

Furthermore, the components of the fitting sound detection device 100 are controlled so that sounds are collected while the worker is holding the wire harness 3 with the head 1, that is, while the worker is performing the fitting operation, and sounds are not collected while the worker is not holding the wire harness 3 with the head 1, that is, while the worker is not performing the fitting operation. With this configuration, the power consumption of the fitting sound detection device 100 can be reduced.

### Second Embodiment

The second embodiment will then be described, focusing on the differences from the first embodiment. In the first embodiment, a configuration, in which a learning model is generated for each location (factory) or group of locations where the fitting sound detection device 100 is used, is described. This was because the background noise could be different for each factory. In this embodiment, noise information indicating the background noise of the location (factory) where the fitting sound detection device 100 is used is stored in the database 500. The noise information may be digital data generated by collecting background noise for each location (factory) or group of locations where the fitting sound detection device 100 is used.

The controller 26 acquires the noise information of the location where the fitting sound detection device 100 is used from the database 500 via the communication unit 24 and stores it in the pre-processing unit 22. The pre-processing unit 22 outputs sound data indicating sounds in which the background noise indicated by the noise information is reduced from sounds indicated by the sound signal. Therefore, the determination unit 23 receives the sound data with the background noise reduced, and thus can accurately detect the fitting sound.

### Third Embodiment

The third embodiment will then be explained, focusing on the differences from the second embodiment. In the second embodiment, the noise information was generated in advance and stored in the database 500. In the present embodiment, the noise information is generated and updated by the fitting sound detection device 100.

The controller 26 starts the determination process when the optical sensor 25 detects the wire harness 3, and stops the determination process when the optical sensor 25 no longer detects the wire harness 3. In this embodiment, when the controller 26 stops the determination process, it starts a measurement process of background noise. The period during which the measurement processing is performed may be set in advance in the controller 26. In this case, the controller 26 terminates the measurement process after a predetermined period of time has elapsed since the start of the measurement process. Alternatively, the measurement process can be performed until the optical sensor 25 detects the wire harness 3. In this case, the controller 26 starts the measurement process when the determination process is finished, and the measurement process continues until the start of the next determination process is triggered. The controller 26 sets at least one of the microphones 21 and the pre-processing unit 22 to the power-saving state while neither the determination process nor the measurement process is being performed.

During the measurement process, the controller 26 sets the microphone 21 and the pre-processing unit 22 to the normal state. The pre-processing unit 22 then determines background noise based on the sound signal input from the microphone 21 during the measurement process and generates noise information. Alternatively, the pre-processing unit 22 updates the noise information already generated based on the sound signal input from the microphone 21 during the measurement process.

As described above, measuring the background noise during the fitting process reduces the influence of background noise, which can vary depending on the date and time, and thus allows accurate determination of the fitting sound.

### Other Embodiments

In the system configuration shown in FIG. 1, the learning server 400 and database 500 are connected to the Internet 300, but the learning server 400 and database 500 may be connected to the LAN 200. In this case, the LAN 200 may be a network closed to the factory, not connected to the Internet 300.

In addition, a configuration can be adopted in which the fitting sound detection device used only for the fitting process, i.e., a fitting sound detection device that operates only in the working mode described above, and the fitting sound detection device used only for collecting learning data, i.e., a fitting sound detection device that operates only in the learning mode described above, are separately provided.

The fitting sound detection device 100 described above has the communication unit 24 and obtains the learning model, noise information, and the like via a network. However, the fitting sound detection device 100 can be configured to store the learning model, noise information and the like in the fitting sound detection device 100 via a general-purpose serial bus (USB) memory device or the like, and the communication unit 24 can be omitted instead. Furthermore, the communication unit 24 may be a wired communication interface such as a USB interface.

In the above embodiment, whether or not the head 1 is holding the fitting member 31 of the wire harness 3 is detected by the optical sensor 25, but it can be configured to detect whether or not the head 1 is holding the fitting member 31 of the wire harness 3 using a sensor different from the optical sensor. For example, a flag that changes its position depending on whether or not the head 1 is holding the fitting member 31 of the wire harness 3 can be installed in the head 1, and a mechanical sensor can be used to detect whether or not the head 1 is holding the fitting member 31 of the wire harness 3 by the position of the flag. Furthermore, it is also possible to use an ultrasonic sensor with a frequency that does not interfere with sounds of the location where it is used to detect whether or not the head 1 is holding the fitting member 31 of the wire harness 3.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A fitting sound detection device comprising:
a microphone (21);
a holding member (1) arranged to hold a fitting member provided on an end of a wire harness;
a sensor (25) arranged to detect the wire harness in which the fitting member is held by the holding member (1); and
control means (26) configured to control execution of a determination process to determine whether or not sound collected by the microphone (21) includes a fitting sound by the fitting member on a basis of sound data based on the sound collected by the microphone (21), wherein
the control means (26) is further configured to execute the determination process while the sensor (25) detects the wire harness, and not execute the determination process while the sensor (25) does not detect the wire harness.

2. The fitting sound detection device according to claim 1, wherein
the control means (26) is configured to not execute the determination process by not collecting sound with the microphone (21) while the sensor (25) does not detect the wire harness.

3. The fitting sound detection device according to claim 1 or 2, wherein
the holding member (1) is attachable to and detachable from a housing including the microphone (21), the sensor (25) and the control means (26).

4. The fitting sound detection device according to claim 3, wherein
the sensor (25) is configured to detect the wire harness by emitting light through a hole provided in the holding member (1).

5. The fitting sound detection device according to any one of claims 1 to 4, further comprising pre-processing means (22) configured to store noise information indicating background noise, and output the sound data indicating sound obtained by subtracting the background noise from the sound collected by the microphone (21) based on the sound collected by the microphone (21) and the noise information.

6. The fitting sound detection device according to claim 5, wherein
the control means (26) is further configured to control an operation state of at least one of the microphone (21) and the pre-processing means (22) so that power consumption of at least one of the microphone (21) and the pre-processing means (22) when the determination process is not being performed is less than the power consumption when the determination process is being performed.

7. The fitting sound detection device according to claim 5, wherein
the control means (26) is further configured to start a measurement process for measuring the background noise based on the sound collected by the microphone (21) and generate or update the noise information in response to the sensor (25) no longer detecting the wire harness.

8. The fitting sound detection device according to claim 7, wherein
the control means (26) is further configured to control an operation state of at least one of the microphone (21) and the pre-processing means (22) so that the power consumption of at least one of the microphone (21) and the pre-processing means (22) when neither the determination process nor the measurement process is being performed is less than the power consumption when the determination process is being performed.

9. The fitting sound detection device according to any one of claims 1 to 8 further comprising determination means (23) configured to determine, using a learning model, whether or not the sound indicated by the sound data from a start of the determination process to an end of the determination process includes the fitting sound.

10. The fitting sound detection device according to claim 9 further comprising communication means configured to communicate with a server storing one or more learning models to obtain the learning model.

11. The fitting sound detection device according to claim 9, wherein
the learning model is associated with a location where the fitting sound detection device is used.

12. The fitting sound detection device according to claim 9, wherein
the learning model is associated with a type of the fitting member.

13. The fitting sound detection device according to any one of claims 1 to 12 further comprising communication means configured to transmit the sound data to a network while the sensor (25) detects the wire harness when operating in a first mode, and not transmit the sound data to the network while the sensor (25) detects the wire harness when operating in a second mode.

14. The fitting sound detection device according to any one of claims 1 to 12 further comprising communication means configured to wirelessly notify a predetermined device of an error when a determination result that the sound collected by the microphone (21) does not include the fitting sound is obtained in the determination process.
